# EUROPEAN PATENT SPECIFICATION

(11) **EP 1 400 943 B1**
(45) Date of publication and mention of the grant of the patent: **22.03.2006**
(21) Application number: 03255685.4
(22) Date of filing: 11.09.2003
(51) Int. Cl.: G08G 1/0968, G01C 21/34

(54) **Navigation system**
Navigationsystem
Système de navigation

(30) Priority: 13.09.2002 JP 2002268372
(43) Date of publication of application: 24.03.2004
(73) Proprietor: Pioneer Corporation, Tokyo 153-8654 (JP)
(72) Inventor: Sakai, Akira Pioneer Corporation, Yamada Kawagoe-shi Saitama (JP); Koga, Yuji Pioneer Corporation, Yamada Kawagoe-shi Saitama (JP)
(74) Representative: Haley, Stephen

(56) References cited:
- WO-A-02/31441
- DE-A- 10 057 073
- US-A- 6 028 553

## Description

The present disclosure relates to the subject matter contained in Japanese Patent Application No. 2002-268372 filed on September 13, 2002

### BACKGROUND OF THE INVENTION

### 1. Field of the Invention

The present invention relates to a navigation terminal mounted on a moving body and also relates to a navigation system including the terminal.

### 2. Description of the Related Art

In a car navigation system mounted on a vehicle, which is a typical moving body, a map is displayed on a display section according to a current position, which has been positioned, of the vehicle, and a mark indicating the current position of the vehicle is displayed on the map.

In the above car navigation system, a measurement section for positioning the current position of the vehicle includes: a GPS (Global Positioning System) receiver; and a self-contained navigation sensor for calculating the current position from a running distance and a proceeding direction of the vehicle. Map information for displaying a map on the display section, associated information associated with the map information and various functional services are provided by an information center located outside the vehicle.

As one of the functional services described above, the following functional service is provided. Information indicating a destination and information indicating a current position, which is a starting place, are sent from the terminal mounted on the vehicle to the information center via the communication section. In the information center, a drive route is searched according to the thus received information. Drive route information indicating the thus searched drive route is sent from the information center to the terminal via the communication section. In the case of executing the above route searching function service, when a user gives a direction to execute searching the route, a communication line for connecting the terminal with the information center is not necessarily established.

For the above reasons, in some cases, there is a great difference between the current position of the vehicle at the point of time when the communication line for connecting the terminal with the information center is established and the position of the vehicle inputted as a starting point when the user gave a direction so as to execute the route searching. As a result, a problem may be caused in which the information centre conducts a calculation of a route connecting a position where no vehicle actually exists with the destination.

In the case where the vehicle deviates from the route, it is necessary for the terminal to acquire a new route from the information center again. In the case where the new route to the destination is demanded according to the position of the vehicle at the point of time when the vehicle deviated from the route, a communication line to connect the terminal with the information center is not necessarily established. In this case, there is a great difference between the current position of the vehicle at the point of time when the communication line to connect the terminal with the information centre is established and the position of the vehicle at the point of time when the new route is demanded. As a result, a problem may be caused in which the information centre conducts a calculation of a route connecting a position where no vehicle actually exists with the destination. A prior art system can be found disclosed in DE-A1-10057073.

In order to solve the above problems, the present invention provides a navigation terminal which comprises:
a measurement section for measuring a current position of a movable body;
a communication section for transmitting information to an information centre, the navigation terminal characterised in that it further comprises:
   a control section that determines if a communication line between the communication section and the information centre is established,
   wherein, in response to determining that the communication line is not established, the control section instructs the communication section to establish the communication line, instructs the measurement section to measure the current position after the communication line is established, and instructs the communication section to transmit information for a route search to the information centre, and
   wherein the information for the route search comprises the current position measured after the communication line is established.

Preferably, the navigation terminal further comprises a destination setting section for setting a destination, wherein the information for the route search includes information indicating the destination.

The present invention further comprises a navigation system which comprises:
a navigation terminal as defined hereinbefore; and
an information centre

The present invention further comprises a computer program making a computer function as a navigation terminal comprising, the computer program executes the steps of:
measuring a current position of a movable body;
transmitting information to an information centre, the computer program characterised in that it further executes the steps of:
   determining if a communication line between a communication section of the navigation terminal and the information centre is established,
   wherein, in response to the determination that the communication line is not established, establishing communication, measuring the current position after the communication line is established and transmitting information for a route search to the information centre, and
   wherein the information for the route search comprises the current position measured after the communication line is established.

The present invention further provides an information transmission method for a navigation apparatus, the method comprises:
determining if a communication line with an information centre is established, the information transmission method characterised in that it further comprises the steps of:
   in response to determining that the communication line is not established, establishing the communication line, measuring the current position after the communication line is established, and transmitting information for a route search to the information centre, and
   wherein the information for the route search comprises the current position measured after the communication line is established.
In the Drawings:
Fig. 1 is a block diagram of an embodiment of the present invention.
Fig. 2 is a flow chart showing a process of connecting a line of an embodiment of the present invention.

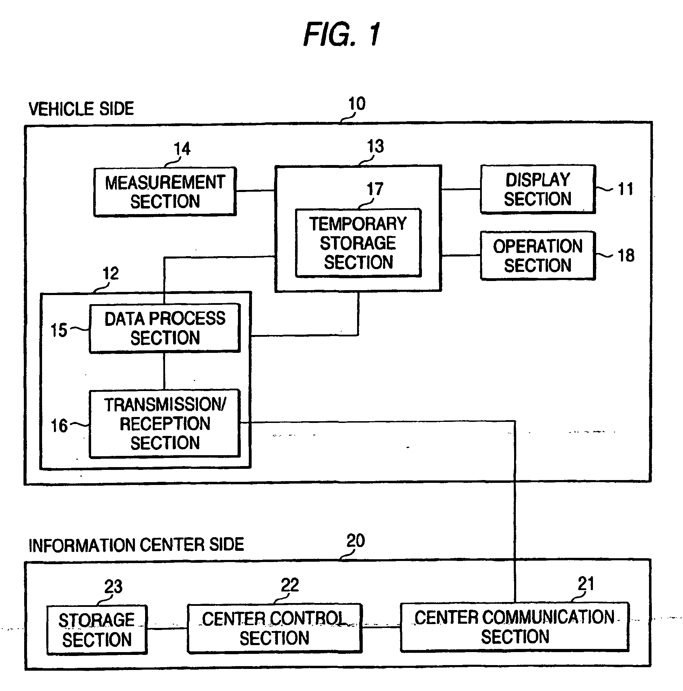

Referring to Fig. 1, an embodiment of the present invention will be explained below. In this embodiment shown here, a navigation terminal according to the invention is applied to a navigation system.

In Fig. 1, reference numeral 10 denotes a navigation, terminal mounted on a vehicle, which is a moving body. The navigation terminal 10 includes a display section 11, a communication section 12, a control section 13, a measurement section 14, and an operation section 18. The control section 13 functions as a display control section for controlling the display section 11, and also functions as a connection control section for controlling the communication section 12. Furthermore, the control section 13 functions as a driving-guide section for performing a driving-guide on the basis of drive route information. The measurement section 14 measures a current position of the vehicle. The operation section 18 allows a user to input designation of a destination and an execution command for a route search. Also, the communication section 12 includes a data process section 15 for processing transmitted/received data and a transmission/reception section 16 for transmitting/receiving data.

Reference numeral 20 shows the constitution of an information center. The information center 20 includes a center communication section 21, a storage section 23, and a center control section 22. The center communication section 21 communicates with the communication section 12 mounted on the vehicle. The storage section 23 stores various information in real time such as map information, facility information, traffic information including traffic jam information, traffic regulation information and traffic accident information, weather information including present weather information and weather forecast in each region, and event information held at present or in the future in each region. The center control section 22 functions as a control section for the center communication section, which controls communication by the center communication section 21, and also functions as a reading control section for controlling reading of the various information from the storage section. Furthermore, the center control section 22 functions as a calculation section for calculating a drive route of the vehicle.

In the above navigation system including the navigation terminal 10 and the information center 20, various demanding commands are sent from the navigation terminal 10 to the information center 20 via a line for connecting the communication section 12 with the center communication section 21. The various information corresponding to the commands are sent from the information center 20 to the navigation terminal 10.

For the line for connecting the communication section 12 with the center communication section 21, it is possible to use the cellular phone service system and the PHS phone service system. The demanding commands sent from the navigation terminal 10 to the information center 20 include an information acquisition command and a functional command, which are provided in the conventional navigation system. The various information acquisition information includes a map demanding command for acquiring map information, a route calculation demanding command for calculating a drive route, a retrieve demanding command for retrieving a facility and a position, and an information demanding command for acquiring various information such as traffic information.

In this case, the map demanding command will be explained in detail as follows. The control section 13 outputs the current position information based on the current position measured by the measurement section 14 and also outputs the map demanding information including the map scale information to the data process section 15. In the data process section 15, the various information is converted into data in a predetermined form and then sent to the information center 20 via the sending and receiving section 16 as the map demanding command.

In the information center 20, according to the map demanding command acquired via the line for connecting the communication section 12 with the center communication section 21, the center control section 22 reads the map information from the storage section 23. This map information, which has been read, is sent to the navigation terminal 10 via the line.

In the navigation terminal 10, according to the map information acquired by the communication section 12 via the line, a map is displayed on the display section 11. In this connection, the control section 13 includes a temporary storage section 17 for temporarily storing information. The temporary storage section 17 keeps to store the various information acquired from the information center 20 including the map information unless the information is positively erased by the user.

Next, the route calculation demanding command is described in detail below. In the navigation terminal 10, under the control of the control section 13, a plurality of images allowing the user to determine a starting place and a destination are displayed on the display section 11 while the images are being successively changed over according to operation of the user.

As a result of operation on the operation section 18 performed by the user in response to the change on the display, the starting place, the destination and a place to pass through are determined. Unless the user especially designates a predetermined position, the starting place is the current position of the vehicle, which has been measured by the measurement section 14 at a time of deciding. When the user has decided only a destination by operation, it is judged that a route from the current position to the destination at that time is to be acquired. The control section 13 outputs the route calculation demanding command information including starting point information, destination information, passing-through point information and route calculating condition information to the data process section 15 according to the information of each place. In the data process section 15, the route calculation demanding command information is converted into a predetermined form and then sent to the information center 20 as a route calculation demanding command.

Concerning the above destination information, a retrieve demanding command including telephone number information and postal number information for retrieving a facility and a place is sent from the navigation terminal 10 to the information center 20. According to the information, the information center 20 retrieves the detailed information of the facility and the place from the storage section 23. The navigation terminal 10 acquires the retrieved detailed information and utilizes the acquired detailed information.

At this time, the control section 13 detects whether or not the line for connecting the communication section 12 with the center communication section 21 is established. When the line for connecting the communication section 12 with the center communication section 21 is established, the route calculation demanding command is immediately sent from the navigation terminal 10 to the information center 20.

On the other hand, when the control section 13 detects that the line for connecting the communication section 12 with the center communication section 21 is not established, first, the control section 13 exhibits the function of the connection control section for controlling the communication section 12 and starts the connection processing of the line to connect the communication section 12 with the center communication section 21. After that, when the connection of the line is established, the information indicating the current position of the vehicle is acquired from the measurement section 14. This information indicating the current position is used as the starting point information. The starting point information is sent together with the destination information, the passing-through point information and the route calculating condition information as the route calculation demanding command information.

According to the route calculation demanding command acquired via the line connecting the communication section 12 with the center communication section 21, the information center 20 calculates the most appropriate drive route from the map information, the starting point information, the destination information, the passing-through point information and the route calculating condition information, which are read by the center control section 22 from the storage section 23. The drive route information according to the thus calculated drive route and the map information of the peripheral region including the route are read from the storage section 23 and sent together to the navigation terminal 10 via the line.

According to the drive route information acquired by the communication section 12 via the line and the map information of the peripheral region including the route, the navigation terminal 10 displays a map, on which the drive route is shown with being superimposed, on the display section 11. In this connection, this drive route information and the map information of the peripheral region including the route are stored in the temporary storage section 17 provided in the control section 13.

As another example of sending the route calculation demanding command, when the vehicle actually deviates from a drive route based on the drive route information, which has already been acquired, the current position after the deviation from the drive route is used as new starting point information, and this starting point information, the destination information, the passing-through point information and the route calculating condition information are automatically sent again as the route calculation demanding command.

When an obstruction to running such as a traffic jam or traffic accident is detected on the drive route, which is based on the thus acquired drive route information, according to the traffic information acquired from the information center 20, a condition to exclude the road on which the obstruction to running is caused is newly added, and this route calculating condition information, the starting point information and the destination information at this point of time and the passing-through point information are automatically sent again as the route calculation demanding command.

Even in the case where the route calculation demanding command is automatically sent when the vehicle deviates from the drive route or when it is detected that an obstruction to running such as a traffic jam or traffic accident is caused on the road, the control section 13 detects whether or not the line connecting the communication section 12 with the center communication section 21 is established. When the line connecting the communication section 12 with the center communication section 21 has been established, the route calculation demanding command is immediately sent from the navigation terminal 10 to the information center 20.

On the other hand, when the control section 13 detects that the line connecting the communication section 12 with the center communication section 21 has not been established, first, the control section 13 functions as a connection control section for controlling the communication section 12, and the connection processing of the line connecting the communication section 12 with the center communication section 21 is started. When the connection of the line is established thereafter, the information indicating the current position of the vehicle is acquired from the measurement section 14 again at that time-This information indicating the current position is used as the starting point information and sent as the route calculation demanding command information together with the destination information, the passing-through point information and the route calculating condition information.

Next, the information demanding command will be described in detail as follows. In the navigation terminal 10, in order to input various types of information, which are required by the user, on the display section 11 under the control of the control section 13, a plurality of images are successively changed over in response to operation conducted by the user.

Examples of the types of information are traffic jam information on the road and traffic information including regulation information and accident information. Further examples of the types of information are weather information including the present weather in each region and weather forecast and event information held in each region at present or in the future.

Information indicating the type of information inputted by the user and region information indicating a necessary region (for example, current position information, destination information and position information indicating a position and region designated by the user) are outputted by the control section 13 to the data process section 15 and converted into a predetermined form in the data process section 15 and then sent to the information center 20 as an information demanding command.

In the information center 20, according to the information demanding command acquired through the line for connecting the communication section 12 with the center communication section 21, the center control section 22 reads the detailed information, which is identical with the type of information included in the information demanding command and also identical with the region information, from the storage section 23. Thus read information is sent to the navigation terminal 10 via the above line.

In the navigation terminal 10, according to the detailed information acquired by the communication section 12 via the line, the detailed information is displayed on the display section 11. At the same time, in the navigation terminal 10, when the map display command is inputted by the user, according to the map information acquired together with the detailed information of the facility, a map, on which marks (a traffic jam mark, traffic accident mark, weather mark and event mark) based on the information are displayed being superimposed, is displayed on the display section 11. In this connection, this detailed information is also stored by the temporary storage section 17 provided in the control section 13.

Further, by utilizing the traffic information acquired as described above, it is detected that an obstruction to running such as a traffic jam or a traffic accident is caused on the drive route.

In the navigation terminal that adopts the navigation system in which various commands and various information are sent and received via the line for connecting the communication section 12 with the center communication section 21, operation is conducted as follows. When the line for connecting the communication section 12 with the center communication section 21 is not established and the route calculation demanding command is sent, first, the connection processing of the line for connecting the communication section 12 with the center communication section 21 is started. When the connection of the line has been established thereafter, new information indicating the current position of the vehicle is automatically obtained from the measurement section 14 at this point of time. This automatically obtained new information indicating the current position of the vehicle is used as the starting point information. This starting point information is sent together with the destination information, the passing-through point information and the route calculating condition information as the route calculation demanding information.

For the reasons described above, a problem that a route connecting a position where no vehicle actually exists with the destination is calculated in the information center is not caused.

### [Example]

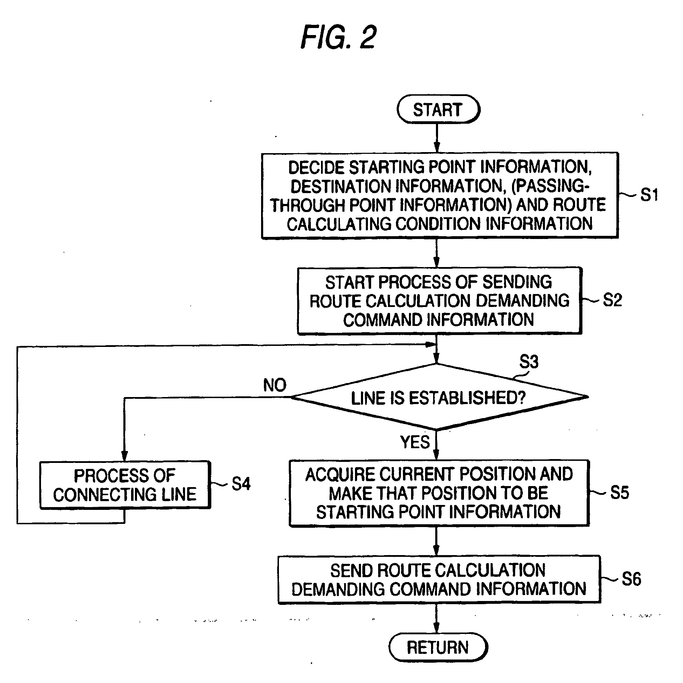

Next, referring to Fig. 2, an example according to the above embodiment will be explained in detail.

Fig. 2 is a flow chart showing a process in which the control section 13 provided in the navigation terminal 10 mounted on the vehicle establishes the line for connecting the navigation terminal 10 with the information center 20 and sends the route calculation demanding command information.

First, in step S1, the starting point information, the destination information (together with the passing-through point information, if necessary) and the route calculating condition information, which-are the route calculation demanding command information, are decided. This decision includes the following cases.

That is, the cases include a case in which the route is obtained for the first time. In this case, the user designates the starting point information, the destination information (together with the passing-through point information, if necessary) and the route calculating condition information for the first time. At this time, unless the user designates a specific position as the starting position, the information indicating the current position of the vehicle, which was measured by the measurement section 14 at a time of determining, is set to be the starting point information.

The cases also include a case in which the drive route information has already been acquired. In this case, when the vehicle deviates from the drive route or it is detected that an obstruction to running such as a traffic jam or a traffic accident on a road is caused, the route calculation demanding command is automatically sent. At this time, with regard to the destination information (together with the passing-through point information, if necessary) and the route calculating condition information, information, which was decided when the route was acquired for the first time, is utilized as it is. With regard to only the starting point information, the information indicating the current position of the vehicle, which has been newly obtained from the measurement section 14, is utilized.

Successively, the processing of sending the route calculation demanding command information is started (step S2). It is judged whether or not the connection of the line with the information center 20 has been completed (whether or not the connection of the line has been established) (step S3).

When it is judged that the connection of the line has not been completed (the line has not been established), the processing of connection of the Line with the information center 20 is continued or newly started (step S4). Then, the process returns to step S3, and it is again judged whether or not the connection of the line has been completed (whether or not the line has been established).

On the other hand, when it is judged that the connection of the line has been completed in step S3 (the line has been established), the information indicating the current position of the vehicle is acquired from the measurement section 14. The acquired information is made to be new starting point information (step S5).

The route calculation demanding command information including this new starting point information is sent to the information center 20 via the line connected (step S6).

As described above, the new starting point information is sent to the information center 20 as the route calculation demanding command information. Accordingly, a problem that a route connecting a position where no vehicle actually exists with the destination is calculated in the information center is not caused.

In the above embodiment, in the case where the route calculation demanding command is automatically sent and the drive route information is acquired when the vehicle deviates from the drive route or when it is detected that an obstruction to running such as a traffic jam on a road or a traffic accident is caused, the destination information (together with the passing-through point information, if necessary) and the route calculating condition information are sent. However, each of the destination information (together with the passing-through point information, if necessary) and the route calculating condition information may be stored in the information center 20 together with the information for discriminating the navigation terminal when the information is sent to the information center 20 for the first time as the route calculation demanding command information. The stored information may be utilized when a new drive route is acquired.

With this construction, when a new drive route is acquired, only the new starting point information is sent to the information center 20 as the route calculation demanding command information. Therefore, it is possible to reduce a quantity of the information to be sent. Accordingly, it is possible to reduce the time and cost necessary for communication.

In the above embodiment, it is sure that the information indicating the current position of the vehicle acquired from the measurement section 14 is made to be the starting point information after it is judged that the connection of the line has been completed in step S3 (the line has been established). However, the starting point information may be determined as follows. A period of time that has passed until the connection of the line is detected. According to the result of the detection, for example, only when the line connection time is longer than a predetermined period of time, the information indicating the current position of the vehicle acquired from the measurement section 14 is made to be the starting point information. When the line connection time is shorter than the predetermined period of time, a position of the vehicle, which was input by the user as the starting point when the user gave a direction so as to execute the route searching, may be utilized as it is. Alternatively, a position of the vehicle in the case of demanding a new route may be utilized as it is.

All the embodiments and examples are explained above when the present invention is applied to an apparatus mounted on a vehicle. However, it should be noted that the present invention can be applied to a cellular phone terminal, on which the measurement section is mounted, and a system in which the terminal device is utilized.

For all the embodiments and examples explained above, it is possible to make computer programs, and the same function as that of the computer can be realized by the computer programs.

## Claims

1. A navigation terminal (10) comprising:
a measurement section (14) for measuring a current position of a movable body;
a communication section (12) for transmitting information to an information centre, the navigation terminal **characterised by** further comprising:
a control section (13) that determines if a communication line between the communication section and the information centre is established,
wherein, in response to determining that the communication line is not established, the control section instructs the communication section to establish the communication line, instructs the measurement section to measure the current position after the communication line is established, and instructs the communication section to transmit information for a route search to the information centre, and
wherein the information for the route search comprises the current position measured after the communication line is established.

2. The navigation terminal (10) according to claim 1, further comprising a destination setting section for setting a destination, wherein the information for the route search includes information indicating the destination.

3. A navigation system comprising:
a navigation terminal (10) according to claim 1; and
an information centre (20).

4. A computer program making a computer function as a navigation terminal (10) comprising, the computer program executing the steps of:
measuring a current position of a movable body;
transmitting information to an information centre (20), the computer program **characterised by** further executing the steps of:
determining if a communication line between a communication section of the navigation terminal (10) and the information centre (20) is established,
wherein, in response to the determination that the communication line is not established, establishing communication, measuring the current position after the communication line is established and transmitting information for a route search to the information centre, and
wherein the information for the route search comprises the current position measured after the communication line is established.

5. An information transmission method for a navigation apparatus, the method comprising:
determining if a communication line with an information centre (20) is established, the information transmission method **characterised by** further comprising the steps of:
in response to determining that the communication line is not established, establishing the communication line, measuring the current position after the communication line is established, and transmitting information for a route search to the information centre,
wherein the information for the route search comprises the current position measured after the communication line is established.

## Patentansprüche

1. Navigationsendgerät (10), umfassend:
einen Messabschnitt (14) zum Messen einer aktuellen Position eines beweglichen Körpers,
einen Kommunikationsabschnitt (12) zum Übertragen von Informationen zu einem Informationszentrum, das Navigationsendgerät ist **dadurch gekennzeichnet, dass** es des Weiteren umfasst:
einen Steuerungsabschnitt (13), der feststellt, ob eine Kommunikationsverbindung zwischen dem Kommunikationsabschnitt und dem Informationszentrum aufgebaut ist,
wobei der Steuerungsabschnitt in Reaktion auf die Feststellung, dass die Kommunikationsverbindung nicht aufgebaut ist, den Kommunikationsabschnitt anweist, die Kommunikationsverbindung aufzubauen, den Messabschnitt anweist, nachdem die Kommunikationsverbindung aufgebaut ist, die aktuelle Position zu messen, und den Kommunikationsabschnitt anweist, Informationen für eine Routensuche zu dem Informationszentrum zu übertragen, und
wobei die Informationen für die Routensuche die aktuelle Position, gemessen, nachdem die Kommunikationsverbindung aufgebaut ist, umfassen.

2. Navigationsendgerät (10) nach Anspruch 1, des Weiteren einen Zielort-Einstellabschnitt zum Einstellen eines Zielortes umfassend, wobei die Informationen für die Routensuche Information enthalten, die den Zielort anzeigt.

3. Navigationssystem, umfassend:
ein Navigationsendgerät (10) nach Anspruch 1 und
ein Informationszentrum (20).

4. Computerprogramm, das bewirkt, dass ein Computer als Navigationsendgerät (10) arbeitet, umfassend das Computerprogramm, das die folgenden Schritte ausführt:
Messen einer aktuellen Position eines beweglichen Körpers,
Übertragen der Informationen an ein Informationszentrum (20), das Computerprogramm ist **dadurch gekennzeichnet, dass** es des Weiteren die folgenden Schritte ausführt:
Feststellen, ob eine Kommunikationsverbindung zwischen einem Kommunikationsabschnitt des Navigationsendgerätes (10) und dem Informationszentrum (20) aufgebaut ist,
in Reaktion auf die Feststellung, dass die Kommunikationsverbindung nicht aufgebaut ist, Aufbauen der Kommunikation, Messen der aktuellen Position, nachdem die Kommunikationsverbindung aufgebaut ist, und Senden der Informationen für eine Routensuche zu dem Informationszentrum,
wobei die Informationen für die Routensuche die aktuelle Position, gemessen, nachdem die Kommunikationsverbindung aufgebaut ist, umfassen.

5. Informationsübertragungsverfahren für eine Navigationsvorrichtung, das Verfahren umfasst:
Feststellen, ob eine Kommunikationsverbindung mit einem Informationszentrum (20) aufgebaut ist; das Informationsübertragungsverfahren ist **dadurch gekennzeichnet, dass** es des Weiteren die folgenden Schritte umfasst:
in Reaktion auf die Feststellung, dass die Kommunikationsverbindung nicht aufgebaut ist, Aufbauen der Kommunikationsverbindung, Messen der aktuellen Position, nachdem die Kommunikationsverbindung aufgebaut ist, und Übertragen der Informationen für eine Routensuche zu dem Informationszentrum,
wobei die Informationen für die Routensuche die aktuelle Position, gemessen, nachdem die Kommunikationsverbindung aufgebaut ist, umfassen.

## Revendications

1. Terminal de navigation (10) comprenant :
une section de mesure (14) destinée à mesurer une position actuelle d'un corps mobile ;
une section de communication (12) destinée à transmettre des informations à un centre d'informations, le terminal de navigation étant **caractérisé en ce qu'**il comprend en outre :
une section de commande (13) qui détermine si une ligne de communication entre la section de communication et le centre d'informations est établie,
dans lequel, en réponse à la détermination que la ligne de communication n'est pas établie, la section de commande émet comme instruction vers la section de communication d'établir la ligne de communication, émet comme instruction vers la section de mesure de mesurer la position actuelle une fois que la ligne de communication est établie, et émet comme instruction vers la section de communication de transmettre des informations sur une recherche de trajet vers le centre d'informations, et
dans lequel les informations sur la recherche de trajet comprennent la position actuelle mesurée une fois que la ligne de communication est établie.

2. Terminal de navigation (10) selon la revendication 1, comprenant en outre une section de réglage de destination destinée à régler une destination, dans lequel les informations sur la recherche de trajet comprennent des informations indiquant la destination.

3. Système de navigation comprenant :
un terminal de navigation (10) selon la revendication 1 ; et
un centre d'informations (20).

4. Programme informatique effectuant une fonction informatique comme un terminal de navigation (10) comprenant, le programme informatique effectuant les étapes consistant à :
mesurer une position actuelle d'un corps mobile
transmettre des informations vers un centre d'informations (20), le programme informatique étant **caractérisé en ce qu'**il réalise en outre les étapes consistant à :
déterminer si une ligne de communication entre une section de communication du terminal de navigation (10) et le centre d'informations (20) est établie,
dans lequel, en réponse à la détermination que la ligne de communication n'est pas établie, établir une communication, mesurer la position actuelle une fois que la ligne de communication est établie et transmettre des informations sur une recherche de trajet vers le centre d'informations, et
dans lequel les informations sur la recherche de trajet comprennent la position actuelle mesurée une fois que la ligne de communication est établie.

5. Procédé de transmission d'informations pour un appareil de navigation, le procédé comprenant les étapes consistant à :
déterminer si une ligne de communication avec un centre d'informations (20) est établie, le procédé de transmission d'informations étant **caractérisé en ce qu'**il comprend en outre les étapes consistant à :
en réponse à la détermination que la ligne de communication n'est pas établie, établir la ligne de communication, mesurer la position actuelle une fois que la ligne de communication est établie, et transmettre des informations sur une recherche de trajet vers le centre d'informations,
dans lequel les informations sur la recherche de trajet comprennent la position actuelle mesurée une fois que la ligne de communication est établie.
